# EUROPEAN PATENT SPECIFICATION

(11) **EP 4 450 141 B1**
(45) Date of publication and mention of the grant of the patent: **03.06.2026**
(21) Application number: 23175507.5
(22) Date of filing: 25.05.2023
(51) Int. Cl.: B01D 3/10, B01D 3/42, B01D 53/14

(54) **AN INSTALLATION AND A PROCESS OF RECONCENTRATION OF AQUEOUS GLYCOL SOLUTION**
VORRICHTUNG UND VERFAHREN ZUR KONZENTRATION EINER WÄSSRIGEN GLYKOLLÖSUNG
INSTALLATION ET PROCÉDÉ DE RECONCENTRATION D'UNE SOLUTION AQUEUSE DE GLYCOL

(30) Priority: 19.04.2023 PL 44448323
(43) Date of publication of application: 23.10.2024
(73) Proprietor: Akademia Gorniczo-Hutnicza im. Stanislawa Staszica w Krakowie, 30-059 Krakow (PL)
(72) Inventor: Nagy, Stanislaw, 30-251 Krakow (PL); Smulski, Rafal, 30-054 Krakow (PL); Bernat, Marcin, 30-074 Krakow (PL)
(74) Representative: Wlasienko, Jozef

(56) References cited:
- KR-B1- 102 008 834
- SU-A1- 581 953
- US-A- 3 616 598
- US-A- 3 974 023
- US-A1- 2004 222 077
- HAROLD L HOFFMAN: "Automatic Control for Distillation", HYDROCARBON PROCESSING & PETROLEUM REFINER,, vol. 42, no. 2, 1 February 1963 (1963-02-01), pages 108 - 122, XP001255090

## Description

The invention relates to an installation and a process of reconcentration of aqueous glycol solution. The invention relates to the field of regeneration of glycols used as absorbents in natural gas, coal bed methane, gases produced in chemical processes and carbon dioxide dehydration units.

In known solutions, a water-rich glycol solution leaving an installation for drying of natural gas is regenerated in a regenerative boiler equipped with a still column. The aqueous glycol solution is heated using a gas burner, electric burner or steam to a temperature close to the thermal degradation temperature of glycol. As a result of heating, the solution evaporates, the vapors of which have a much higher concentration of water than the liquid phase. The glycol solution is therefore regenerated by atmospheric distillation using different relative volatility of the mixture components.

The known methods for increasing of regenerated glycol concentration consist in reducing the partial pressure of water in the glycol still column. Reducing the partial pressure of water is achieved in several ways, e.g. by: using a stripping gas, using a cooling medium flowing through a gas space of equalizing tank or a boiler causing condensation of water-rich mixture and lowering the pressure - generating vacuum in the still column.

A currently known solutions are based on reducing the pressure in the still column by means of vacuum pumps or ejectors.

In the publication No. US3,616,598A, an installation for regeneration of glycol is equipped with an ejector located at the end of the line that discharges the vapors from a still column. Upstream to the ejector, a vapor condenser and a separator collecting condensate are built in a vapor line. Water vapor separated from the glycol solution is condensed and separated in a separator, while hydrocarbon vapors released from the glycol are sucked into a low-pressure connector of the ejector and mixed with a motive gas. Dried natural gas was used to propel the ejector, which then, after being mixed with hydrocarbons separated from the glycol, is combusted in a regenerator burner.

The disadvantage of the solution known from the prior art is potential problems relating to operation of the regenerator burner due to changes in parameters/composition of fuel. They can occur as a result of the ejector suction of heavier hydrocarbons from the separator of condensates and mixing them with fuel gas. Hydrocarbon vapors sucked from the separator are saturated with water, therefore their mixing with fuel gas has a negative effect on burner work. In addition, to generate higher pressure reduction in the regenerator, it is necessary to use increasing amounts of motive gas for the ejector, while the regenerator burner can use only a certain amount of gas. In case of using fuel gas as motive gas, the obtainable negative pressure is limited by the maximum fuel demand of the regenerator burner.

The object of the present invention is to provide a process and an installation for reconcentration of aqueous glycol solution, which are free from the above disadvantages.

The invention relates to an installation for reconcentration of aqueous glycol solution, characterized in that it comprises a boiler for evaporation of water from the glycol solution, connected to a still column for separating evaporated water and evaporated hydrocarbons from glycol with a reflux cooler and a condenser connected to the still column via a pipeline discharging water vapor and hydrocarbon vapors from the still column to the condenser, a separator connected to the condenser via a pipeline discharging water and hydrocarbon vapors from the condenser to the separator and an ejector connected to a pipeline discharging hydrocarbon vapors from the separator to the atmosphere, wherein the ejector is moved by compressed, dried air delivered through a line, generating negative pressure in the boiler, the still column, the condenser and the separator, and in the pipelines connecting them.

A flowmeter and a control valve regulating an amount of air delivered to the ejector are connected to the line. A pressure transmitter is connected to the pipeline discharging water vapor and hydrocarbon vapors from the still column to the condenser. The flow of the motive air is controlled depending on the indication of the value of the generated negative pressure.

Furthermore, the pipeline discharging water and hydrocarbon vapors from the condenser to the separator is equipped with a check valve and a pipeline bypass with connected full bore cut-off valves.

In the installation according to the invention, evaporating of water from the glycol solution in the boiler is carried out at temperature from 180°C to 204°C for triethylene glycol solution and at temperature from 200°C to 235°C for tetraethylene glycol solution. The negative pressure generated by the ejector is from -0,6 barg to 0 barg.

The invention also relates to a process of reconcentration of aqueous glycol solution, in the claimed installation whereby it comprises evaporating of water from the glycol solution in the boiler, at a temperature lower than the temperature of thermal decomposition of glycol and under negative pressure, separating the evaporated water and evaporated hydrocarbons from the glycol in the still column, discharging water vapor and hydrocarbon vapors from the still column to the condenser, condensing water vapor in the condenser, discharging water and hydrocarbon vapors from the condenser to the separator, separating water from hydrocarbon vapors in the separator and discharging hydrocarbon vapors from the separator to the atmosphere via the ejector, wherein the negative pressure in the boiler is generated by the ejector driven by atmospheric air. The hydrocarbon vapors, separated in the still column, are hydrocarbons dissolved in the glycol solution in the gas dehydration absorber. They are released from the glycol solution as a result of pressure reduction and heating the solution.

Preferebly, evaporating of water from the glycol solution in the boiler is carried out at temperature from 180°C to 204°C for triethylene glycol solution and at temperature from 200°C to 235°C for tetraethylene glycol solution.

Prefered negative pressure generated by the ejector is from -0,6 barg to 0 barg.

Difference in vapor pressure of two components i.e. water and glycol enables reconcentration of glycol solution. The evaporation temperature of water is significantly lower from that of glycol, therefore the gas phase above the solution is rich in water. The process and installation according to the invention allow to create negative pressure in the boiler and the glycol still column, hence higher degree of glycol distillation is achieved. The boiler, the still column, the condenser and the separator are connected to form one space and therefore the same negative pressure value will be maintained inside them. In turn, a higher concentration of glycol feeded to the gas dehydration absorber allows for a lower dew point temperature of the dried gas - its better drying. Operation of the ejector does not increase the emission of gaseous pollutants from the installation for glycol reconcentration, while the use of air reduces the fire hazard of the installation. The mixture of motive air and small amounts of hydrocarbons that were dissolved in the regenerated glycol is discharged to the atmosphere. The invention is illustrated by the following example and drawing, which is a schematic representation of installation for reconcentration of aqueous glycol solution according to the invention.

Installation for reconcentration of aqueous glycol solution consists of the boiler 1.1 for heating and evaporation of water from the glycol solution, connected to the still column 1.2 for separating evaporated water and evaporated hydrocarbons from glycol, the condenser 2 connected to the still column 1.2 via the pipeline 9.1 discharging water vapor and hydrocarbon vapors from the still column 1.2 to the condenser 2, the separator 3 connected to the condenser 2 via the pipeline 9.2 discharging water and hydrocarbon vapors from the condenser 2 to the separator 3 and the ejector 4 connected to the pipeline 12.1 discharging hydrocarbon vapors from the separator 3 to the atmosphere. The condenser 2 condenses the water vapor. Temperature at the outlet of the still column is maintained by an additional reflux cooler 1.3. The ejector 4 is motived by compressed, dried air, the source of which is the compressed air installation. In the exemplary installation according to the invention, the flowmeter 6 and the control valve 5 regulating an amount of delivered air are connected to the line 10 delivering compressed air to the ejector 4. The degree of opening of the valve 5, and thus the amount of supplied motive air, is regulated depending on the required level of negative pressure in the boiler 1.1 and the still column 1.2. The pressure transmitter 7 is connected to the pipeline 9.1 discharging vapors from the column 1.2 to the condenser 2 and further to the separator 3, the signal of which allows to control the control valve 5. As a result of operation of the ejector, in the separator 3, the condenser 2, the pipelines 9.1, 9.2, 12.1, the boiler 1.1 and the still column 1.2 negative pressure is generated, the value of which depends on the amount of the used motive air. The mixture of motive air and hydrocarbon vapors with a pressure close to atmospheric pressure is discharged to the atmosphere via the line 12.2. The pipeline 9.2 delivering condensate and hydrocarbon vapors to the separator 3 is equipped with the check valve 11 and the pipeline bypass 13 with full bore cut-off valves 8. The check valve 11 protects the boiler installation 1.1 against accidental air backflow in case of faulty operation of the ejector 4, whereas the pipeline bypass 13 allows the still column 1.2 to operate in the atmospheric distillation mode.

In the exemplary process of reconcentration of aqueous glycol solution, water was evaporated from the triethylene glycol solution (TEG) at the temperature of 180°C and from tetraethylene glycol solution (TREG) at the temperature of 210°C. The used boiler 1.1 was filled to a height of 0.7 of the diameter with a solution of glycol and water, in which the flame tube with the connected burner was completely immersed. In the still column 1.2, in which the separation of water and glycol took place, structural and random packing was used.

In the process simulator (Chemcad), the model of an absorptive gas dehydration unit with the glycol reconcentration unit was prepared. The model was tested for two different glycols TEG and TREG. For the purposes of the simulation of the installation using TEG, the TEG model was adopted to calculate the values of the equilibrium constants K and the SRK model to calculate the enthalpy. For the installation using TREG, the PSRK model was adopted. As to the thermodynamic properties of the models, it was also assumed that water and hydrocarbons do not mix each other. The simulations consisted in examining the effect of lowering the pressure on the mass concentration of regenerated L-TEG/L-TREG (L- is lean/regenerated glycol) and the obtained water dew point temperature of the gas. Simulations showed that, for TEG, lowering the regeneration pressure to -50 kPag allows to obtain regenerated L-TEG with a concentration of about 99.33% by weight, while for atmospheric distillation a concentration of about 98.5% by weight was obtained. For TREG, lowering the regeneration pressure to -50 kPag allows obtaining regenerated L-TREG with a concentration of about 99.63% by weight, while for atmospheric distillation a concentration of about 99.2% by weight was obtained. Simulations were carried out for four working values of pressures of the dehydrated gas: 30, 26, 20 and 15 barg, and for regeneration pressures TEG/TREG in the range from -50 kPag to +7 kPag. The exact results of the obtained concentration of regenerated L-TEG/L-TREG glycols also depend on the pressure of the gas to be dehydrated, due to the fact that at different pressures, different amounts of water are removed from the gas, which then is separated from the glycol solution. The effect of the L-TEG/L-TREG flowrate change in the cycle on the obtained water dew point temperatures of the gas was also checked. The models were tested for two values of L-TEG/L-TREG flowrates. The first flowrate was 280 kg/h, i.e. it is the optimal value for the adopted, dehydrated gas flowrate and the column diameter of 0.6 m. The second flowrate was 450 kg/h, which is the maximum capacity of the adopted dosing pump model. In case of TEG, the increase in the TEG flowrate caused a slight change in the obtained dew point temperature of the gas. The improvement was from about 1,2°C to about 2,7°C depending on the pressure of the gas to be dehydrated. In case of TREG, the increase in the glycol flowrate in the cycle caused a more significant effect as the obtained dew point temperatures of the gas, i.e. from about 6,8°C to about 8,8°C.

The invention allowed to increase the efficiency of the process of regeneration of glycols, which resulted directly in increasing the efficiency of gas dehydration in glycol unit. The invention also increases safety of operation glycol regeneration unit.

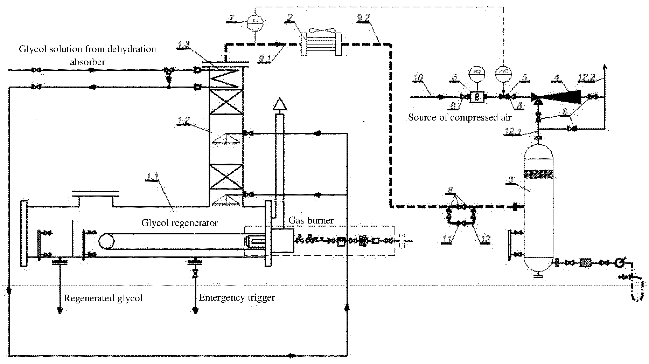

## Claims

1. An installation for reconcentration of an aqueous glycol solution, wherein it comprises a boiler (1.1) for evaporation of water from the glycol solution directly connected to a still column (1.2) for separating evaporated water and evaporated hydrocarbons from glycol, with an additional reflux cooler (1.3) maintaining temperature at the outlet of the still column (1.2), a condenser (2) connected to the still column (1.2) directly via a pipeline (9.1) discharging water vapor and hydrocarbon vapors from the still column to the condenser, a separator (3) connected to the condenser (2) directly via a pipeline (9.2) discharging water and hydrocarbon vapors from the condenser (2) to the separator (3), and an ejector (4) connected to a pipeline (12.1) discharging hydrocarbon vapors from the separator (3) together with dried air to the atmosphere via the line 12.2, wherein the ejector (4) is moved by compressed, dried air delivered through a line (10), generating negative pressure in the boiler (1.1), the still column (1.2), the condenser (2) and the separator (3), and in the pipelines connecting them (9.1, 9.2, 12.1);
wherein a flowmeter (6) and a control valve (5) regulating an amount of air delivered to the ejector (4) are connected to the line (10);
a pressure transmitter (7) is connected to the pipeline (9.1) discharging water vapor and hydrocarbon vapors from the still column (1.2) to the condenser (2), the signal of which controls the control valve (5);
the boiler (1.1) being equipped with a gas burner and
the pipeline (9.2) discharging water and hydrocarbon vapors from the condenser (2) to the separator (3) is equipped with a check valve (11) and a pipeline bypass (13) with connected full bore cut-off valves (8).

2. A process of reconcentration of an aqueous glycol solution in the installation of claim 1 whereby it comprises evaporating of water from the glycol solution in the boiler (1.1), at a temperature lower than the temperature of thermal decomposition of glycol and under negative pressure, separating the evaporated water and evaporated hydrocarbons from the glycol in the still column (1.2), discharging water vapor and hydrocarbon vapors from the still column (1.2) to the condenser (2), condensing water vapor in the condenser (2), discharging water and hydrocarbon vapors from the condenser (2) to the separator (3), separating water from hydrocarbon vapors in the separator (3) and discharging hydrocarbon vapors from the separator (3) to the atmosphere via the ejector (4), wherein the negative pressure in the boiler (1.1) is generated by the ejector (4) moved by compressed, dried air, wherein an amount of air delivered to the ejector (4) is regulated, depending on the required level of negative pressure, by a flowmeter (6) and a control valve (5).

3. The process of claim 2, **characterized in that** evaporating of water from the glycol solution in the boiler (1.1) is carried out at temperature from 180°C to 204°C for triethylene glycol solution.

4. The process of claim 2, **characterized in that** evaporating of water from the glycol solution in the boiler (1.1) is carried out at temperature from 200°C to 235°C for tetraethylene glycol solution.

5. The process of claims 2-4, **characterized in that** negative pressure generated by the ejector (4) is from -0,6 barg to 0 barg.

## Patentansprüche

1. Die Installation zur Rückkonzentrierung einer wässrigen Glykollösung, bestehend aus einem Kessel (1.1) zur Verdampfung des Wassers aus der Glykollösung, der direkt mit einer Destillationskolonne (1.2) zur Trennung von verdampftem Wasser und verdampften Kohlenwasserstoffen vom Glykol verbunden ist, mit einem Rückflusskühler (1.3), der die Temperatur am Auslass der Destillationskolonne (1.2) aufrechterhält, aus einem Kondensator (2), der über eine Rohrleitung (9.1) direkt mit der Destillationskolonne (1.2) verbunden ist und Wasserdampf und Kohlenwasserstoffdämpfe aus der Destillationskolonne zum Kondensator ableitet, einem Abscheider (3), der über eine Rohrleitung (9.2) direkt mit dem Kondensator (2) verbunden ist und Wasser- und Kohlenwasserstoffdämpfe vom Kondensator (2) zum Abscheider (3) ableitet, und einem Ejektor (4), der über eine Rohrleitung (12.1) verbunden ist und Kohlenwasserstoffdämpfe aus dem Abscheider (3) über die Leitung (12.2) in die Atmosphäre ableitet, wobei der Ejektor (4) durch komprimierte, getrocknete Luft angetrieben wird, die über eine Leitung (10) zugeführt wird, um der Unterdruck im Kessel (1.1), in der Destillationskolonne (1.2), im Kondensator (2) und im Abscheider (3) sowie in den diese verbindenden Rohrleitungen (9.1, 9.2, 12.1), zu erzeugen;
wobei ein Durchflussmesser (6) und ein Regelventil (5) zur Regelung der dem Ejektor (4) zugeführten Luftmenge an die Leitung (10) angeschlossen sind;
ein Druckmessumformer (7) an die Rohrleitung (9.1) angeschlossen ist, die den Wasserdampf und Kohlenwasserstoffdämpfe von der Destillationskolonne (1.2) zum Kondensator (2) ableitet, dessen Signal das Regelventil (5) steuert;
der Kessel (1.1) mit einem Gasbrenner und einer Notauslösung ausgestattet ist; und
die Rohrleitung (9.2), die Wasser- und Kohlenwasserstoffdämpfe vom Kondensator (2) zum Abscheider (3) ableitet, mit einem Rückschlagventil (11) und einem Rohrleitungsbypass (13) mit angeschlossenen Volldurchgangs-Absperrventilen (8) ausgestattet ist.

2. Verfahren zur Rückkonzentrierung einer wässrigen Glykollösung in der Installation nach Anspruch 1, wobei es das Verdampfen von Wasser aus der Glykollösung im Kessel (1.1) bei einer Temperatur unterhalb der thermischen Zersetzungstemperatur von Glykol und unter Unterdruck, das Abtrennen des verdampften Wassers und der verdampften Kohlenwasserstoffe vom Glykol in der Destillationskolonne (1.2), das Ablassen von Wasserdampf und Kohlenwasserstoffdämpfen aus der Destillationskolonne (1.2) in den Kondensator (2), das Kondensieren von Wasserdampf im Kondensator (2), das Ablassen von Wasser und Kohlenwasserstoffdämpfen aus dem Kondensator (2) in den Abscheider (3), das Abtrennen von Wasser von Kohlenwasserstoffdämpfen im Abscheider (3) und das Ablassen von Kohlenwasserstoffdämpfen aus dem Abscheider (3) in die Atmosphäre über den Ejektor (4) umfasst, wobei der Unterdruck im Kessel (1.1) durch den Ejektor (4) erzeugt wird, der durch komprimierte, getrocknete Luft angetrieben wird, wobei die dem Ejektor (4) zugeführte Luftmenge je nach erforderlichem Unterdruckniveau durch einen Durchflussmesser und ein Regelventil (5) geregelt wird (6).

3. Verfahren nach Anspruch 2, **dadurch gekennzeichnet, dass** die Verdampfung des Wassers aus der Glykollösung im Kessel (1.1) im Falle von Triethylenglykollösung bei einer Temperatur von 180 °C bis 204 °C erfolgt.

4. Verfahren nach Anspruch 2, **dadurch gekennzeichnet, dass** die Verdampfung des Wassers aus der Glykollösung im Kessel (1.1) im Falle von Tetraethylenglykollösung bei einer Temperatur von 200 °C bis 235 °C erfolgt.

5. Verfahren nach den Ansprüchen 2-4, **dadurch gekennzeichnet, dass** der vom Ejektor (4) erzeugte Unterdruck zwischen -0,6 barg und 0 barg liegt.

## Revendications

1. Installation de reconcentration d'une solution aqueuse de glycol, comprenant une chaudière (1.1) pour l'évaporation de l'eau de la solution de glycol, directement reliée à une colonne à distiller (1.2) pour la séparation de l'eau et des hydrocarbures évaporés du glycol, avec un refroidisseur à reflux (1.3) maintenant la température à la sortie de la colonne à distiller (1.2), un condenseur (2) relié directement à la colonne à distiller (1.2) par une conduite (9.1) évacuant la vapeur d'eau et les vapeurs d'hydrocarbures de la colonne à distiller vers le condenseur, un séparateur (3) relié directement au condenseur (2) par une conduite (9.2) évacuant l'eau et les vapeurs d'hydrocarbures du condenseur (2) vers le séparateur (3), et un éjecteur (4) relié à une conduite (12.1) évacuant les vapeurs d'hydrocarbures du séparateur (3) vers l'atmosphère par la conduite 12.2, l'éjecteur (4) est mis en mouvement par de l'air comprimé et séché délivré par une conduite (10), générant une pression négative dans la chaudière (1.1), la colonne à distiller (1.2), le condenseur (2) et le séparateur (3), ainsi que dans les conduites qui les relient (9.1, 9.2, 12.1) ;
dans laquelle un débitmètre (6) et une vanne de réglage (5) régulant la quantité d'air délivrée à l'éjecteur (4) sont connectés à la conduite (10) ;
un transmetteur de pression (7) est connecté à la conduite (9.1) évacuant la vapeur d'eau et les vapeurs d'hydrocarbures de la colonne à distiller (1.2) vers le condenseur (2), dont le signal commande la vanne de réglage (5) ;
la chaudière (1.1) est équipée d'un brûleur à gaz et d'un déclencheur d'urgence ; et
la conduite (9.2) évacuant l'eau et les vapeurs d'hydrocarbures du condenseur (2) vers le séparateur (3) est équipée d'un clapet antiretour (11) et d'une dérivation (13) avec des vannes d'arrêt à passage intégral (8) connectées.

2. Procédé de reconcentration d'une solution aqueuse de glycol dans l'installation selon la revendication 1, comprenant l'évaporation de l'eau de la solution de glycol dans la chaudière (1.1), à une température inférieure à la température de décomposition thermique du glycol et sous pression négative, la séparation de l'eau et des hydrocarbures évaporés du glycol dans la colonne à distiller (1.2), l'évacuation de la vapeur d'eau et des vapeurs d'hydrocarbures de la colonne à distiller (1.2) vers le condenseur (2), la condensation de la vapeur d'eau dans le condenseur (2), l'évacuation de l'eau et des vapeurs d'hydrocarbures du condenseur (2) vers le séparateur (3), la séparation de l'eau des vapeurs d'hydrocarbures dans le séparateur (3) et l'évacuation des vapeurs d'hydrocarbures du séparateur (3) vers l'atmosphère via l'éjecteur (4), dans lequel la pression négative dans la chaudière (1.1) est générée par l'éjecteur (4) mis en mouvement par de l'air comprimé et séché, dans lequel la quantité d'air délivrée à l'éjecteur (4) est régulée, en fonction du niveau de pression négative requis, par un débitmètre (6) et une vanne de réglage (5).

3. Procédé selon la revendication 2, **caractérisé en ce que** l'évaporation de l'eau de la solution de glycol dans la chaudière (1.1) est réalisée à une température comprise entre 180 °C et 204 °C pour la solution de triéthylène glycol.

4. Procédé selon la revendication 2, **caractérisé en ce que** l'évaporation de l'eau de la solution de glycol dans la chaudière (1.1) est réalisée à une température comprise entre 200 °C et 235 °C pour la solution de tétraéthylène glycol.

5. Procédé selon les revendications 2 à 4, **caractérisé en ce que** la pression négative générée par l'éjecteur (4) est comprise entre -0,6 barg et 0 barg.
